# EUROPEAN PATENT APPLICATION

(11) **EP 4 693 439 A1**
(43) Date of publication of application: **11.02.2026**
(21) Application number: 25762336.3
(22) Date of filing: 19.02.2025
(51) Int. Cl.: H01M 4/13, H01M 4/66, H01M 4/74, H01M 10/04, H01M 10/42, H01M 4/02

(54) **BIPOLAR ELECTRODE, ELECTRODE ASSEMBLY COMPRISING SAME, BIPOLAR BATTERY COMPRISING ELECTRODE ASSEMBLY, AND METHOD FOR MANUFACTURING BIPOLAR BATTERY**

(30) Priority: 27.02.2024 KR 20240027781
(71) Applicant: LG Energy Solution, Ltd., Seoul 07335 (KR)
(72) Inventor: JUNG, Hyun Ok, Daejeon 34122 (KR)
(74) Representative: BCKIP Part mbB
(86) International application number: PCT/KR2025/002370
(87) International publication number: WO 2025/183402

(57) **Abstract**

Disclosed is a bipolar electrode including a current collector including a polymer film and conductive layer added to at least a part of each of an outer surface and an inner surface of the polymer film, a positive electrode formed on a first surface of the current collector, and a negative electrode formed on a second surface of the current collector, wherein the current collector including the polymer film is thermally fused so as to be sealed, whereby migration of an electrolyte between unit electrodes is prevented.

## Description

### [Technical Field]

This application claims the benefit of priority to Korean Patent Application No. 10-2024-0027781 filed on February 27, 2024, the disclosure of which is incorporated herein by reference in its entirety.

The present invention relates to a bipolar electrode, an electrode assembly including the same, a bipolar battery including the electrode assembly, and a method of manufacturing the bipolar battery. More particularly, the present invention relates to a bipolar electrode configured such that the structure of a current collector of the bipolar electrode is modified, whereby a means configured to prevent migration of an electrolyte between stacked bipolar electrodes is simplified, an electrode assembly including the same, a bipolar battery including the electrode assembly, and a method of manufacturing the bipolar battery.

### [Background Art]

Due to the global abnormal weather phenomenon, the climate clock is speeding up, and the movement to replace fossil fuels with eco-friendly energy is growing. As one form of eco-friendly energy, a lithium secondary battery is taking the place of fossil fuels.

Due to the advantages of high energy density and high power output, the lithium secondary battery may be used as an energy source for devices that require a lot of energy, such as an electric vehicle, and the application rate of the lithium secondary battery in various fields is increasing.

The lithium secondary battery includes a monopolar electrode having a general form in which electrode mixtures having the same polarity are applied to both surfaces of a current collector or a bipolar electrode in which active materials having different polarities are applied to both surfaces of a current collector.

The bipolar electrode has the advantage of forming a high potential and achieving high energy density and high power output due to the feature that a positive electrode and a negative electrode are stacked so as to be connected to each other in series connection due to the structure thereof.

In an electrode assembly including stacked bipolar electrodes, self-discharge and bypass current may occur if an electrolyte migrates between different bipolar electrodes and is mixed. Therefore, it is necessary to provide a structure that separates the electrolyte by preventing migration of the electrolyte between the bipolar electrodes.

In addition, when a plurality of bipolar electrodes is stacked, the current collectors of the bipolar electrodes may come into contact with each other, or ends of the bipolar electrodes may be nonuniform, in which case an electrode active material layer and the current collector may come into contact with each other. This may cause unexpected short circuit.

Conventionally, therefore, adding an adhesive between the current collectors of the bipolar electrodes in order to fix the current collectors or disposing a separate member on an outer periphery of the current collector and adding an adhesive in order to fix the separate member is proposed.

Patent Document 1 discloses a bipolar current collector including a base film and a first conductive layer and a second conductive layer formed on both sides of the base film by coating, wherein a positive electrode material and a negative electrode material are attached to the first conductive layer and the second conductive layer, and a conductive sealing film including a sealing conductive layer and a polymer layer is installed on both ends of the base film. Both ends of the sealing conductive layer of the conductive sealing film are connected the first conductive layer and the second conductive layer, and the polymer layer is added to the outside of the sealing conductive layer so as to wrap around the same and is connected to the first conductive layer and the second conductive layer.

Patent Document 1 proposes a structure including a current collector having a first conductive layer and a second conductive layer formed on both sides of a base film by coating, wherein a conductive sealing film is connected to the current collector but is insulated from a bipolar electrode adjacent thereto, whereby it is possible to prevent migration of an electrolyte. However, Patent Document 1 separately requires a conductive sealing film including a sealing conductive layer and a polymer layer in addition to the current collector in order to provide such a configuration.

Patent Document 2 discloses a bipolar lithium secondary battery including a bipolar unit, wherein a polymer film attached to an edge of a current collector separates electrolytes adjacent to electrodes having different polarities from each other, whereby intermigration of the separated electrolytes is prevented.

However, Patent Document 2 further requires a separate polymer film in addition to the current collector.

Therefore, there is a need for technology capable of preventing migration of an electrolyte between bipolar electrodes even though an electrode assembly including bipolar electrodes and a bipolar battery do not require an additional structure other than the basic configuration of the bipolar electrodes.

### (Prior Art Documents)

(Patent Document 1) Chinese Patent Application Publication No. 112687842 (2021.04.20)
(Patent Document 2) Korean Patent Application Publication No. 2020-0143281 (2020.12.23)

### [Disclosure]

### [Technical Problem]

The present invention has been made in view of the above problems, and it is an object of the present invention to provide a bipolar electrode configured such that a polymer film having a conductive layer added to a central part thereof and a thermally fusible outer periphery is used as a current collector of the bipolar electrode, whereby the structure of the bipolar electrode is simplified and migration of an electrolyte between bipolar electrodes is prevented, an electrode assembly including the same, a bipolar battery including the electrode assembly, and a method of manufacturing the bipolar battery.

### [Technical Solution]

A bipolar electrode according to the present invention to accomplish the above object includes a current collector including a polymer film and a conductive layer added to at least a part of each of an outer surface and an inner surface of the polymer film, a positive electrode formed on a first surface of the current collector, and a negative electrode formed on a second surface of the current collector.

The polymer film may include a first region having through-holes through which a conductive material of the conductive layer added to the both outer surfaces of the polymer film is introduced and received and a second region located at an outer periphery of the first region, the second region having no through-holes.

The conductive layer may be added to the first region of each of the first surface and the second surface.

The positive electrode may be located on the conductive layer of the first surface, and the negative electrode may be located on the conductive layer of the second surface.

A separator may be further added to an outer surface of any one of the positive electrode or the negative electrode.

The separator may be thermally fused to the positive electrode or the negative electrode to which the separator is added and at least a part of the second region of the polymer film.

The present invention provides an electrode assembly configured such that a plurality of the bipolar electrode are stacked, wherein outer peripheries of the polymer films of the current collectors of the plurality of bipolar electrodes are thermally fused.

A unit electrode partitioned by the thermally fused outer peripheries of the polymer films may be formed, and an electrolyte injected into the unit electrode may be separated from an electrolyte injected into another unit electrode adjacent thereto.

The uppermost bipolar electrode may have an electrode layer formed only on a lower surface of the current collector, the lowermost bipolar electrode may have an electrode layer formed only on an upper surface of the current collector, and each bipolar electrode other than the uppermost bipolar electrode and the lowermost bipolar electrode may have a positive electrode formed on the first surface of the current collector and a negative electrode formed on the second surface of the current collector.

A support member may be further disposed in a second region of the current collector, and the support member may be thermally fused to the second region of the current collector.

The present invention provides a bipolar battery having the electrode assembly received in a battery case, wherein each of an uppermost bipolar electrode and a lowermost bipolar electrode of the electrode assembly includes an electrode terminal.

The present invention provides a method of manufacturing the bipolar battery. Specifically, the method includes a first step of preparing bipolar electrodes, a second step of stacking the bipolar electrodes to manufacture an electrode assembly, a third step of heating three of four outer peripheries of the electrode assembly, excluding one outer periphery, to thermally fuse current collectors, a fourth step of injecting an electrolyte into the electrode assembly, a fifth step of heating the one outer periphery to thermally fuse the current collectors, and a sixth step of receiving the electrode assembly in a battery case and sealing the battery case.

The first step may include a 1-1 step of preparing a polymer film, a 1-2 step of forming a conductive layer in a first region of each of both surfaces of the polymer film by coating to manufacture a current collector, a 1-3 step of disposing a positive electrode in a first region of a first surface of the current collector and disposing a negative electrode in a first region of a second surface of the current collector, and a 1-4 step of stacking a separator on an upper surface of any one of the positive electrode and the negative electrode.

Each of the uppermost bipolar electrode and the lowermost bipolar electrode of the electrode assembly may include an electrode terminal.

In addition, the present invention may provide various combinations of the above solving means.

### [Advantageous Effects]

According to the present invention, a conductive layer is formed on each of both surfaces of a polymer film in the parts of the polymer film to which a positive electrode and a negative electrode are applied, whereby electrical connection is formed such that electrons move in the conductive layer, and the outer periphery of the polymer film to which the positive electrode and the negative electrode are not applied may be sealed by thermal fusion.

Consequently, series connection between the positive electrode and the negative electrode may be formed through the polymer film, and migration of an electrolyte between neighboring unit electrodes may be prevented.

### [Description of Drawings]

FIG. 1 is an exploded perspective view of a bipolar electrode according to the present invention.
FIG. 2 is an exploded vertical sectional view of the bipolar electrode of FIG. 1.
FIG. 3 is a vertical sectional view showing the state in which a separator is added to the bipolar electrode according to the present invention.
FIG. 4 is a view showing an electrode assembly according to a first embodiment in which bipolar electrodes are stacked.
FIG. 5 is a perspective view showing a process of thermally fusing the electrode assembly of FIG. 4.
FIG. 6 is a view showing an electrode assembly according to a second embodiment in which bipolar electrodes are stacked.
FIG. 7 is a perspective view showing a process of thermally fusing the electrode assembly of FIG. 6.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the drawings.

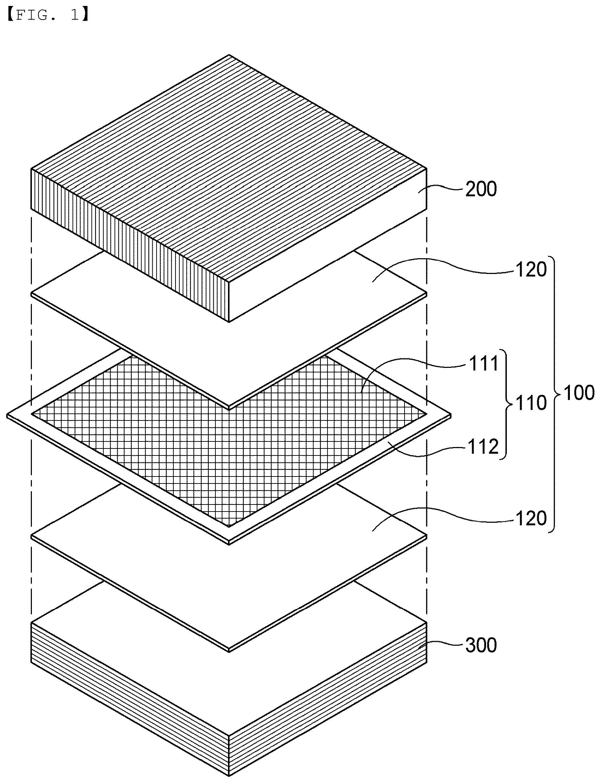

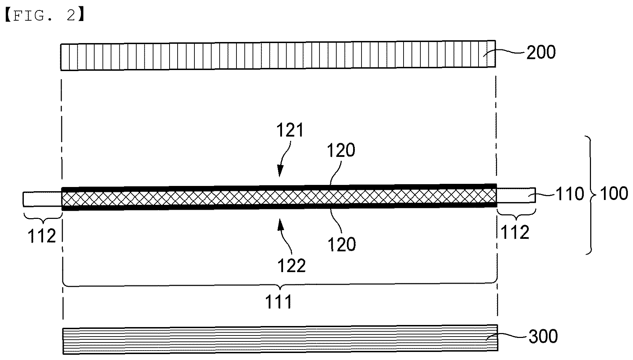

FIG. 1 is an exploded perspective view of a bipolar electrode according to the present invention, and FIG. 2 is an exploded vertical sectional view of the bipolar electrode of FIG. 1.

Generally, a bipolar electrode is configured such that a positive electrode mixture layer and a negative electrode mixture layer are added to each of both surfaces of a current collector, electrons can move between a positive electrode and a negative electrode via the current collector, and current flows in a battery cell in a thickness direction of each electrode. However, it is necessary to prevent the movement of an electrolyte between adjacent unit electrodes because there is a risk of an internal short circuit occurring if the electrolyte is transferred across the boundary of the current collector of the bipolar electrode.

Referring to FIGs. 1 and 2, the bipolar electrode according to the present invention has a positive electrode 200 located on a first surface 121 of the current collector 100 and a negative electrode 300 located on a second surface 122 of the current collector 100. The current collector 100 includes a polymer film 110 and a conductive layer 120, wherein the polymer film 110 includes a first region 111 having through-holes through which a conductive material of the conductive layer 120 added to each outer surface thereof is introduced and received and a second region 112 located at an outer periphery of the first region 111 and having no through-holes.

The polymer film 110 may include at least one selected from the group consisting of polyethylene terephthalate (PET), polypropylene, polyethylene, polystyrene, polyvinyl chloride, polyimide, and polyamide.

The through-holes may be configured to allow the conductive material of the conductive layer added to one outer surface of the polymer film to migrate to the opposite outer surface of the polymer film through the polymer film. For example, the first region may be configured as a mesh structure.

The diameter of the through-hole may be tens of micrometers to a few millimeters, but the size of the through-hole is not particularly limited as long as the conductive material of the conductive layer added to each side surface of the polymer film can be introduced into and can pass through the through-hole.

However, if the size of the through-hole is too small, introduction of the conductive material is difficult, which is undesirable, and if the size of the through-hole is too large, there is a risk of breakage when the bipolar electrode is bent, which is also undesirable.

The conductive layer 120 is added to at least a part of each of the outer surface and the inner surface of the polymer film 110, wherein the conductive layer is added to the first region 111 of each of the first surface 121 and the second surface 122 of the current collector 100. Consequently, the conductive material constituting the conductive layer 120 may be added to the surface of the first region 111 and at least some of the through-holes formed in the first region 111. As the conductive material is added to the outer surface of the insulative polymer film 110 and the inner surface of the through-hole, as described above, the polymer film may function as an electrically conductive collector. In addition, the conductive material added to the first region 111 fills the interiors of the through-holes, and the conductive materials added to both outer surfaces of the polymer film 110 may be connected to each other through the through-holes, whereby an electrical connection path may be formed.

The positive electrode 200 is located on the conductive layer 120 of the first surface 121, and the negative electrode 300 is located on the conductive layer 120 of the second surface 122.

In the current collector 100 between the positive electrode 200 and the negative electrode 300, the through-holes of the first region 111 of the polymer film 110 may be filled with the conductive material, whereby electrons migrate between the positive electrode 200 and the negative electrode 300 through the conductive material, and therefore the positive electrode and the negative electrode may be connected to each other in series.

Meanwhile, the second region 112 is a region in which the positive electrode 200 and the negative electrode 300 are not disposed and the polymer film 110 has no through-holes, whereby the second region 112 may be thermally fused after being stacked into an electrode assembly. When the outer periphery of the current collector is thermally fused in this manner, an independent space is formed between current collectors of neighboring bipolar electrodes.

The components disposed in the independent space thus formed constitute an individual unit electrode, whereby it is possible to prevent migration of an electrolyte between neighboring unit electrodes.

Meanwhile, the conductive layer 120 formed on the first surface 121 of the current collector 100 and the conductive layer 120 formed on the second surface 122 of the current collector 100 may be made of the same material or different materials.

For example, each of the conductive layer 120 formed on the first surface 121 and the conductive layer 120 formed on the second surface 122 may be made of any one selected from the group consisting of aluminum, copper, and nickel.

Alternatively, the conductive layer 120 formed on the first surface 121 where the positive electrode 200 is disposed may be made of aluminum, and the conductive layer 120 formed on the second surface 122 where the negative electrode 300 is disposed may be made of copper.

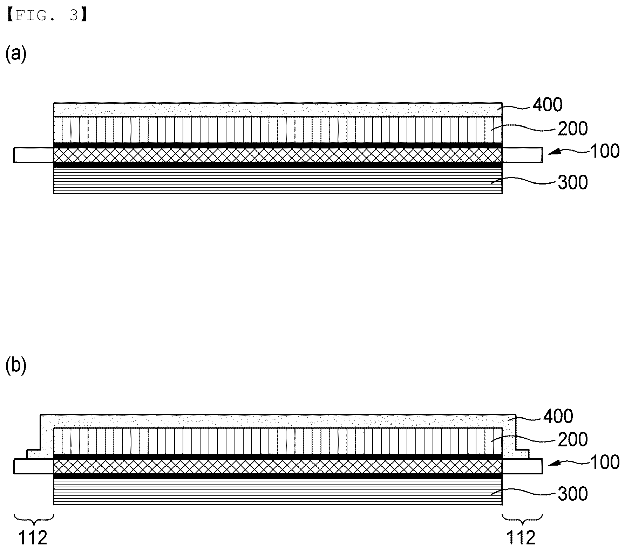

FIG. 3 is a vertical sectional view showing the state in which a separator is added to the bipolar electrode according to the present invention.

Referring to FIG. 3, a separator 400 is further added to the bipolar electrode. When a plurality of bipolar electrodes is stacked to form an electrode assembly, physical contact between the bipolar electrodes may be prevented by the separator 400.

(a) of FIG. 3 shows the state in which the separator 400 is added to an upper surface of the positive electrode 200. Unlike this, the separator 400 may be added to a lower surface of the negative electrode 300.

The separator 400 added to the outer surface of the positive electrode 200 or the negative electrode 300 may be bonded to the positive electrode or the negative electrode by thermal fusion.

(b) of FIG. 3 shows the state in which a separator 400 having a size extending not only to the upper surface of the positive electrode 200 but also to the second region 112 of the polymer film of the current collector 100 is added.

Even when the separator 400 extending as shown in (b) of FIG. 3 is added, the separator 400 may be added not only to the upper surface of the positive electrode but also to the lower surface of the negative electrode 300 and the second region 112 of the polymer film of the current collector 100.

The separator 400 may be bonded to the surface of the positive electrode 200 or the negative electrode 300 and to the second region 112 by thermal fusion. Reliable bonding between the electrode having the separator added thereto and the current collector may be secured.

A method of manufacturing a bipolar electrode according to the present invention may include a 1-1 step of preparing a polymer film, a 1-2 step of forming a conductive layer in a first region of each of both surfaces of the polymer film by coating to manufacture a current collector, a 1-3 step of disposing a positive electrode in a first region of a first surface of the current collector and disposing a negative electrode in a first region of a second surface of the current collector, and a 1-4 step of stacking a separator on an upper surface of any one of the positive electrode and the negative electrode.

A process of heating and pressing the bipolar electrode such that the separator is fused to a surface of the bipolar electrode may be further included after disposing the positive electrode and the negative electrode on the current collector and stacking the separator.

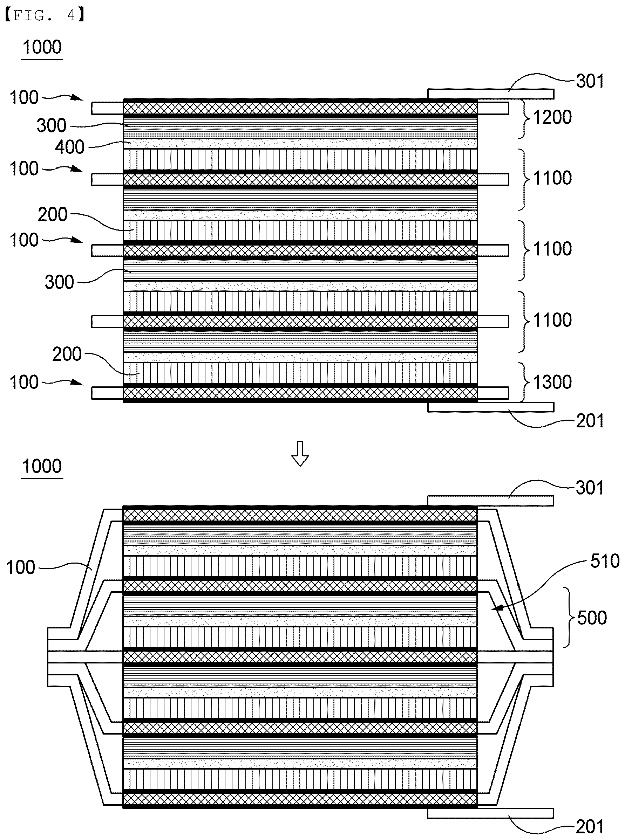

FIG. 4 is a view showing an electrode assembly according to a first embodiment in which bipolar electrodes are stacked.

Referring to FIG. 4, the electrode assembly 1000 is configured such that bipolar electrodes, one of which is shown in (a) of FIG. 3, are stacked.

In FIG. 4, the upper figure shows an electrode assembly 1000 manufactured by stacking a plurality of bipolar electrodes, and the lower figure shows the state in which a current collector 100 of the electrode assembly 1000 is heated, whereby a second region, which is an outer periphery of the current collector 100, is thermally fused.

In the electrode assembly 1000, three bipolar electrodes 1100, each of which has a positive electrode 200 located on an upper surface of the current collector 100 and a negative electrode 300 located on a lower surface of the current collector, are stacked, the uppermost bipolar electrode 1200 has a negative electrode 300 located only on the lower surface of the current collector 100, and the lowermost bipolar electrode 1300 has a positive electrode 200 located only on the upper surface of the current collector 100.

The number of the bipolar electrodes 1100 in the electrode assembly 1000 shown in FIG. 4 may be changed as needed.

Each of the uppermost bipolar electrode 1200 and the lowermost bipolar electrode 1300 of the electrode assembly 1000 includes an electrode terminal.

The electrode terminal may include an electrode lead or an electrode tab, and the electrode terminal may include a body portion having a planar area equal to or less than the planar area of each of the uppermost bipolar electrode and the lowermost bipolar electrode, the body portion being coupled to each of the uppermost bipolar electrode and the lowermost bipolar electrode, and an extension portion extending from the body portion to one outer periphery thereof so as to protrude beyond the outer periphery of each of the uppermost bipolar electrode and the lowermost bipolar electrode.

Specifically, the uppermost bipolar electrode 1200 of the electrode assembly 1000 includes only a negative electrode, and the lowermost bipolar electrode 1300 of the electrode assembly 1000 includes only a positive electrode, wherein a negative electrode terminal 301 is coupled to an upper surface of the uppermost bipolar electrode 1200, and a positive electrode terminal 201 is coupled to a lower surface of the lowermost bipolar electrode 1300.

Unlike what is shown in FIG. 4, each of the positive electrode terminal 201 and the negative electrode terminal 301 may include a body portion having a size that covers the entirety of a corresponding one of the uppermost bipolar electrode 1200 and the lowermost bipolar electrode 1300 and an extension portion extending from the body portion to one outer periphery thereof so as to protrude out of a battery case when received in the battery case.

Alternatively, the area of the body portion may have a size that can cover at least a part of the outer surface of each of the uppermost bipolar electrode 1200 and the lowermost bipolar electrode 1300, and the extension portion may extend to protrude out of the electrode case.

In this case, the electrode assembly 1000 including the bipolar electrodes may be configured such that the electrodes are connected to each other in series, and when the electrode assembly 1000 is received in the battery case, only the positive electrode terminal 201 and the negative electrode terminal 301 attached to both ends of the bipolar electrodes connected to each other in series extend out of the battery case.

When the outer periphery of the electrode assembly 1000 is heated, the outer peripheries of the polymer films 110 of the current collectors 100 are thermally fused to each other. As the polymer films 110 are thermally fused to each other in this manner, a pocket-like space 510 is formed, and the inside and outside of the pocket-like space 510 are separated from each other. A unit electrode 500 having each space 510 partitioned by the polymer films is formed. When an electrolyte is individually injected into the unit electrode 500 and the outer peripheries of the polymer films 110 are thermally fused to each other, the electrolyte injected into the unit electrode 500 is separated from electrolytes injected into other unit electrodes adjacent thereto.

A method of manufacturing a bipolar battery according to the present invention includes a first step of preparing bipolar electrodes, a second step of stacking the bipolar electrodes to manufacture an electrode assembly, a third step of heating three of four outer peripheries of the electrode assembly, excluding one outer periphery, to thermally fuse current collectors, a fourth step of injecting an electrolyte into the electrode assembly, a fifth step of heating the one outer periphery to thermally fuse the current collectors, and a sixth step of receiving the electrode assembly in a battery case and sealing the battery case.

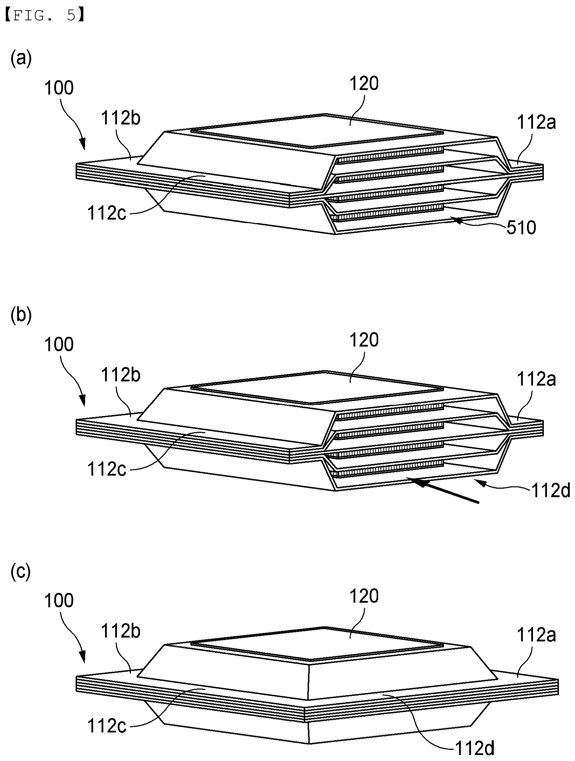

FIG. 5 is a perspective view showing a process of thermally fusing the electrode assembly of FIG. 4.

Referring to FIG. 5, bipolar electrodes are stacked to prepare the electrode assembly of FIG. 4, and three 112a, 112b, and 112c of four outer peripheries of the electrode assembly are pressed, heated, and thermally fused to form a pocket-like space in which only one outer periphery 112d is open, as shown in (a) of FIG. 5. The one outer periphery 112d is not thermally fused to inject an electrolyte.

The electrolyte is injected in the direction of the arrow, as shown in (b) of FIG. 5. At this time, the electrolyte is individually injected into each of the pocket-like spaces.

(c) of FIG. 5 shows the state in which the outer periphery 112d has been pressed, heated, and thermally fused.

Subsequently, although not shown in FIG. 5, the electrode assembly is received in a battery case, and the battery case is sealed.

A pouch-shaped case made of a laminate sheet including a resin layer and a metal layer or a prismatic case made of a metal may be used as the battery case.

Meanwhile, the electrode assembly having the three outer peripheries 112a, 112b, and 112c thermally fused, as shown in (a) of FIG. 5, may be first received in the battery case, an electrolyte may be injected into the electrode assembly, the outer periphery 112d of the electrode assembly may be thermally fused, and the battery case may be sealed to manufacture the bipolar battery.

Since the bipolar battery according to the present invention includes a current collector in the form of a conductive layer added to the surface of a polymer film having through-holes only in a central part thereof, as described above, the outer periphery of the polymer film having no through-holes may be thermally fused to form a partitioned space. Consequently, neighboring bipolar electrodes may be connected to each other in series, and migration of the electrolyte between neighboring unit electrodes may be prevented.

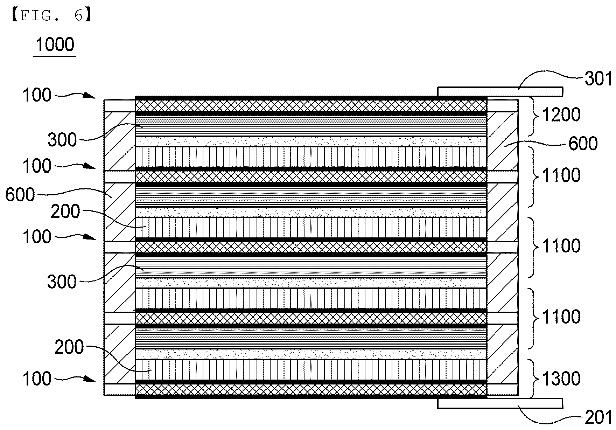

FIG. 6 is a view showing an electrode assembly according to a second embodiment in which bipolar electrodes are stacked.

Referring to FIG. 6, the electrode assembly including the bipolar electrodes according to the second embodiment is different from the electrode assembly including the bipolar electrodes according to the first embodiment shown in FIG. 4 in that a support member 600 is added between current collectors 100.

The material for the support member 600 is not particularly limited as long as the support member 600 is disposed in second regions of the current collectors 100 to maintain the shape of the electrode assembly and to prevent migration of an electrolyte and has no side reaction with the electrolyte. For example, the support member may be made of at least one selected from the group consisting of polyethylene terephthalate (PET), polypropylene, polyethylene, polystyrene, polyvinyl chloride, polyimide, and polyamide. Specifically, the support member may be made of the same material as the polymer film.

FIG. 6 shows that the height of the support member 600 corresponds to the sum of the thickness of a negative electrode 300, a separator 400, and a positive electrode 200. Unlike this, however, the height of the support member 600 may be less than the sum of the thickness of the negative electrode 300, the separator 400, and the positive electrode 200.

When the support member 600 is added, each of an upper surface and a lower surface of the support member 600 may be thermally fused to the second region of the current collector 100.

A description of the electrode assembly including the stacked bipolar electrodes according to the first embodiment is equally applicable to other configurations of the electrode assembly including the stacked bipolar electrodes according to the second embodiment.

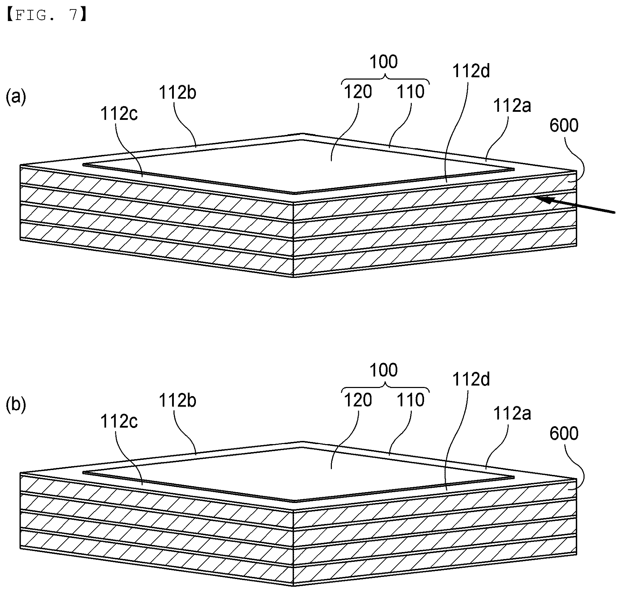

FIG. 7 is a perspective view showing a process of thermally fusing the electrode assembly of FIG. 6.

Referring to FIG. 7, the support member 600 may be formed in the shape of a quadrangular frame, and when the bipolar electrodes are stacked, the bipolar electrodes and the support member may be alternately stacked such that the support member 600 is located between the current collectors 100. Subsequently, three 112a, 112b, and 112c of four outer peripheries of the electrode assembly are pressed, heated, and thermally fused to form a pocket-like space in which only one outer periphery 112d is open, as shown in (a) of FIG. 7.

An electrolyte is injected through one outer periphery 112d, which is not thermally fused, in a state of being deformed such that a gap is formed between the current collector 100 and the support member 600. At this time, the electrolyte is individually injected into each of the pocket-like spaces.

After the electrolyte injection is completed, the outer periphery 112d is pressed, heated, and thermally fused.

Subsequently, although not shown in FIG. 7, the electrode assembly is received in a battery case, and the battery case is sealed.

Meanwhile, the electrode assembly having the three outer peripheries 112a, 112b, and 112c thermally fused, as shown in (a) of FIG. 7, may be first received in the battery case, an electrolyte may be injected into the electrode assembly, the outer periphery 112d of the electrode assembly may be thermally fused, and the battery case may be sealed to manufacture the bipolar battery.

A description of the electrode assembly including the stacked bipolar electrodes according to the first embodiment is equally applicable to other configurations of the electrode assembly including the stacked bipolar electrodes according to the second embodiment, and therefore a detailed description thereof will be omitted.

Those skilled in the art to which the present invention pertains will appreciate that various applications and modifications are possible within the category of the present invention based on the above description.

### (Description of Reference Symbols)

- 100:: Current collector
- 110:: Polymer film
- 111:: First region
- 112:: Second region
- 112a, 112b, 112c, 112d:: Outer peripheries
- 120:: Conductive layer
- 121:: First surface
- 122:: Second surface
- 200:: Positive electrode
- 201:: Positive electrode terminal
- 300:: Negative electrode
- 301:: Negative electrode terminal
- 400:: Separator
- 500:: Unit electrode
- 510:: Space
- 600:: Support member
- 1000:: Electrode assembly
- 1100, 1200, 1300:: Bipolar electrodes

## Claims

1. A bipolar electrode, comprising:
a current collector comprising a polymer film and a conductive layer added to at least a part of each of an outer surface and an inner surface of the polymer film;
a positive electrode formed on a first surface of the current collector; and
a negative electrode formed on a second surface of the current collector.

2. The bipolar electrode according to claim 1, wherein the polymer film comprises:
a first region having through-holes through which a conductive material of the conductive layer added to the both outer surfaces of the polymer film is introduced and received; and
a second region located at an outer periphery of the first region, the second region having no through-holes.

3. The bipolar electrode according to claim 2, wherein the conductive layer is added to the first region of each of the first surface and the second surface.

4. The bipolar electrode according to claim 3, wherein
the positive electrode is located on the conductive layer of the first surface, and
the negative electrode is located on the conductive layer of the second surface.

5. The bipolar electrode according to claim 1, wherein a separator is further added to an outer surface of any one of the positive electrode or the negative electrode.

6. The bipolar electrode according to claim 5, wherein the separator is thermally fused to the positive electrode or the negative electrode to which the separator is added and at least a part of the second region of the polymer film.

7. An electrode assembly configured such that a plurality of the bipolar electrode according to any one of claims 1 to 6 are stacked, wherein
outer peripheries of the polymer films of the current collectors of the plurality of bipolar electrodes are thermally fused.

8. The electrode assembly according to claim 7, wherein
a unit electrode partitioned by the thermally fused outer peripheries of the polymer films is formed, and
an electrolyte injected into the unit electrode is separated from an electrolyte injected into another unit electrode adjacent thereto.

9. The electrode assembly according to claim 8, wherein
an uppermost bipolar electrode has an electrode layer formed only on a lower surface of the current collector,
a lowermost bipolar electrode has an electrode layer formed only on an upper surface of the current collector, and
each bipolar electrode other than the uppermost bipolar electrode and the lowermost bipolar electrode has a positive electrode formed on the first surface of the current collector and a negative electrode formed on the second surface of the current collector.

10. The electrode assembly according to claim 7, wherein
a support member is further disposed in a second region of the current collector, and
the support member is thermally fused to the second region of the current collector.

11. A bipolar battery having the electrode assembly according to claim 7 received in a battery case, wherein
each of an uppermost bipolar electrode and a lowermost bipolar electrode of the electrode assembly comprises an electrode terminal.

12. A method of manufacturing the bipolar battery according to claim 11, the method comprising:
a first step of preparing bipolar electrodes;
a second step of stacking the bipolar electrodes to manufacture an electrode assembly;
a third step of heating three of four outer peripheries of the electrode assembly, excluding one outer periphery, to thermally fuse current collectors;
a fourth step of injecting an electrolyte into the electrode assembly;
a fifth step of heating the one outer periphery to thermally fuse the current collectors; and
a sixth step of receiving the electrode assembly in a battery case and sealing the battery case.

13. The method according to claim 12, wherein the first step comprises:
a 1-1 step of preparing a polymer film;
a 1-2 step of forming a conductive layer in a first region of each of both surfaces of the polymer film by coating to manufacture a current collector;
a 1-3 step of disposing a positive electrode in a first region of a first surface of the current collector and disposing a negative electrode in a first region of a second surface of the current collector; and
a 1-4 step of stacking a separator on an upper surface of any one of the positive electrode and the negative electrode.

14. The method according to claim 12, wherein each of an uppermost bipolar electrode and a lowermost bipolar electrode of the electrode assembly comprises an electrode terminal.
